# EUROPÄISCHE PATENTSCHRIFT

(11) **EP 4 377 892 B1**
(45) Veröffentlichungstag und Bekanntmachung des Hinweises auf die Patenterteilung: **04.11.2026**
(21) Anmeldenummer: 22769197.9
(22) Anmeldetag: 25.08.2022
(51) Int. Cl.: G06T 7/73

(54) **VERFAHREN ZUR ERMITTLUNG EINER ZIELPOSITION**
METHOD FOR DETECTING A TARGET POSITION
PROCÉDÉ DE DÉTERMINATION D'UNE POSITION CIBLE

(30) Priorität: 28.09.2021 EP 21199484
(43) Veröffentlichungstag der Anmeldung: 05.06.2024
(73) Patentinhaber: Siemens Aktiengesellschaft, 80333 München (DE)
(72) Erfinder: BENKERT, Johannes, 90763 Fürth (DE); RECKTENWALD, Alois, 91074 Herzogenaurach (DE); VOGEL, Julian, 91052 Erlangen (DE)
(74) Vertreter: Siemens Patent Attorneys
(86) Internationale Anmeldenummer: PCT/EP2022/073636
(87) Internationale Veröffentlichungsnummer: WO 2023/052008

(56) Entgegenhaltungen:
- PRICE LEON C ET AL: "Multisensor-driven real-time crane monitoring system for blind lift operations: Lessons learned from a case study", AUTOMATION IN CONSTRUCTION, ELSEVIER, AMSTERDAM, NL, vol. 124, 23 January 2021 (2021-01-23), XP086500897, ISSN: 0926-5805, [retrieved on 20210123], DOI: 10.1016/J.AUTCON.2021.103552
- LEE JAECHEUL: "Deep learning-assisted real-time container corner casting recognition", vol. 15, no. 1, 1 January 2019 (2019-01-01), pages 1 - 11, XP055893368, ISSN: 1550-1477, Retrieved from the Internet <URL:http://journals.sagepub.com/doi/full-xml/10.1177/1550147718824462> DOI: 10.1177/1550147718824462

## Beschreibung

Die Erfindung betrifft ein computer-implementiertes Verfahren zur Ermittlung einer Zielposition beim automatisierten Positionieren einer Last auf einem Objekt.

Ferner betrifft die Erfindung eine Steuereinheit mit Mitteln zur Durchführung eines derartigen Verfahrens.

Überdies betrifft die Erfindung ein Computerprogramm zur Durchführung eines derartigen Verfahrens bei Ablauf in einer Steuereinheit.

Des Weiteren betrifft die Erfindung ein Positionierungssystem aufweisend zumindest einen laserbasierten Sensor und eine Steuereinheit.

Darüber hinaus betrifft die Erfindung einen Kran aufweisend zumindest ein Positionierungssystem.

Ein derartiger Kran ist beispielsweise als Portalkran, insbesondere Containerkran, welcher auch Containerbrücke genannt wird, ausgeführt und wird in einem Hafenterminal zum Beladen von ISO Containern auf LKWs und Tragwagen, insbesondere Bahntragwagen, eingesetzt. Insbesondere in Container-Terminals laufen Verladevorgänge mit Hilfe von Kranen zunehmend automatisiert, also ohne manuelle Eingriffe von Operatoren, ab.

Die Offenlegungsschrift WO 2020/221490 A1 beschreibt ein Verfahren zur kollisionsfreien Bewegung einer Last mit einem Kran in einem Raum mit mindestens einem Hindernis. Um auf möglichst einfache Weise einen Sicherheitslevel zu erfüllen, wird vorgeschlagen, dass eine Position des Hindernisses bereitgestellt wird, wobei zumindest eine sichere Zustandsgröße der Last bereitgestellt wird, wobei aus der sicheren Zustandsgröße eine die Last umgebende Sicherheitszone ermittelt wird, wobei die Sicherheitszone in Relation zur Position des Hindernisses dynamisch überwacht wird.

Die wissenschaftliche Publikation Leon C. Price et al: "Multisensor-driven real-time crane monitoring system for blind litt operations: Lessons learned from a case study", Automation in Construction, Elsevier, Amsterdam, NL, Bd. 124, 23. Januar 2021, ISSN: 0926-5805, DOI: 10.1016/J.AUTCON.2021.103552 beschreibt ein sensorgesteuertes Echtzeit-Kranüberwachungssystem, das aus Modulen zur Lastverfolgung, Hinderniserkennung, Arbeitererkennung, Kollisionswarnung und 3D-Visualisierung besteht. Eine Kombination aus Encodern, Bildverarbeitungssystemen und Laserscannern wird verwendet, um ein 3D-Arbeitsraummodell der Kranumgebung zu rekonstruieren und dem Bediener räumliches Feedback in Echtzeit zu geben.

Die wissenschaftliche Publikation Jaecheul Lee: "Deep learning-assisted real-time container corner casting recognition", International Journal of Distribute Sensor Networks, Bd. 15, Nr. 1, 1. Januar 2019, Seiten 1 - 11, ISSN: 1550-1477, DOI: 10.1177/1550147718824462 beschreibt ein automatisiertes Kransystem mit einer effizienten Erkennung von Eckstücken.

Vor diesem Hintergrund liegt der Erfindung die Aufgabe zugrunde, ein Verfahren zur Ermittlung einer Zielposition beim automatisierten Positionieren einer Last auf einem Objekt anzugeben, das, im Vergleich zum Stand der Technik, eine verbesserte Performance und geringere Berechnungszeiten ermöglicht.

Die Aufgabe wird erfindungsgemäß gelöst durch ein computer-implementiertes Verfahren zur Ermittlung einer Zielposition beim automatisierten Positionieren einer Last auf einem Objekt, wobei die Last ein Container und das Objekt ein LKW ist, aufweisend folgende Schritte: Erfassen des Objekts mittels zumindest eines Sensors, Erstellen einer 3D-Punktwolke, welche das Objekt repräsentiert, Projizieren der 3D-Punktwolke in zumindest eine 2D-Projektionsebene, Detektieren zumindest einer Struktur zum Positionieren der Last mittels Bildverarbeitung, wobei die zumindest eine Struktur ein Twistlock auf einer Ladefläche eines LKWs ist, wobei das Detektieren der zumindest einen Struktur zum Positionieren der Last mittels eines neuronalen Netzes erfolgt, Rückprojizieren der 2D-Projektionsebene in den dreidimensionalen Raum, Ermitteln einer Position der zumindest einen Struktur im dreidimensionalen Raum, wobei die 2D-Projektionsbene Pixel aufweist, welche Punkte der Projektion repräsentieren, wobei den Pixeln zumindest ein Kanal zugeordnet wird, welcher eine Höheninformation, eine Remission und/oder Informationen zu Flächennormalen umfasst.

Ferner wird die Aufgabe erfindungsgemäß gelöst durch ein computer-implementiertes Verfahren zur Ermittlung einer Zielposition beim automatisierten Positionieren einer Last auf einem Objekt, wobei die Last ein Container und das Objekt zumindest ein weiterer Container eines Containergebirges ist, aufweisend folgende Schritte: Erfassen des Objekts mittels zumindest eines Sensors, Erstellen einer 3D-Punktwolke, welche das Objekt repräsentiert, Projizieren der 3D-Punktwolke in zumindest eine 2D-Projektionsebene, Detektieren zumindest einer Struktur zum Positionieren der Last mittels Bildverarbeitung, wobei die zumindest eine Struktur ein Kante auf dem weiteren Container ist, wobei das Detektieren der zumindest einen Struktur zum Positionieren der Last mittels eines neuronalen Netzes erfolgt, Rückprojizieren der 2D-Projektionsebene in den dreidimensionalen Raum, Ermitteln einer Position der zumindest einen Struktur im dreidimensionalen Raum, wobei die 2D-Projektionsbene Pixel aufweist, welche Punkte der Projektion repräsentieren, wobei den Pixeln zumindest ein Kanal zugeordnet wird, welcher eine Höheninformation, eine Remission und/oder Informationen zu Flächennormalen umfasst.

Ferner wird die Aufgabe erfindungsgemäß gelöst durch eine Steuereinheit mit Mitteln zur Durchführung eines derartigen Verfahrens.

Überdies wird die Aufgabe erfindungsgemäß gelöst durch ein Computerprogramm zur Durchführung eines derartigen Verfahrens bei Ablauf in einer Steuereinheit.

Des Weiteren wird die Aufgabe erfindungsgemäß gelöst durch ein Positionierungssystem mit zumindest einem laserbasierten Sensor und einer derartigen Positionierungssystem.

Darüber hinaus wird die Aufgabe erfindungsgemäß gelöst durch einen Kran mit zumindest einem derartigen Sicherheitssystem.

Die in Bezug auf das Verfahren nachstehend angeführten Vorteile und bevorzugten Ausgestaltungen lassen sich sinngemäß auf die Steuereinheit, das Computerprogramm, das Positionierungssystem und den Kran übertragen.

Der Erfindung liegt die Überlegung zugrunde, bei einem Verfahren zur Ermittlung einer Zielposition beim automatisierten Positionieren einer Last auf einem Objekt eine verbesserte Performance und geringere Berechnungszeiten zu erreichen, indem eine Transformation von dreidimensionalen Daten in eine 2D-Projektionsebene durchgeführt wird. Eine derartige Last ist ein Container, während das Objekt beispielsweise ein LKW oder zumindest ein weiterer Container eines Containergebirges ist. Insbesondere wird ein derartiger Container Ecke auf Ecke auf einem Containergebirge oder, z.B. mittels Twistlocks, auf einem LKW platziert. Das Verfahren beinhaltet ein Erfassen des Objekts mittels zumindest eines Sensors, wobei der Sensor als laserbasierter Sensors ausgeführt ist. Aus den Sensordaten wird daraufhin eine 3D-Punktwolke erstellt, welche das Objekt repräsentiert.

In einem weiteren Schritt wird die 3D-Punktwolke des Objekts in zumindest eine 2D-Projektionsebene projiziert. Durch eine derartige Projektion wird eine Anzahl der für die Weiterverarbeitung relevanten Punkte reduziert. In einem weiteren Schritt wird zumindest eine Struktur zum Positionieren der Last mittels Bildverarbeitung in der 2D-Projektionsebene detektiert. Eine derartige Struktur ist beispielsweise ein Twistlock auf einer Ladefläche eines LKWs oder eine Kante auf einem Container. Daraufhin wird die 2D-Projektionsebene in den dreidimensionalen Raum zurückprojiziert. Anschließend wird eine Position der zumindest einen Struktur im dreidimensionalen Raum ermittelt. Durch die Projektion der 3D-Punktwolke zur Weiterverarbeitung in eine 2D-Projektionsebene und die Rücktransformation wird die Berechnungszeit reduziert, ohne dass die Genauigkeit, insbesondere merklich, beeinträchtigt wird. Durch eine derartige Verbesserung der Leistungsfähigkeit wird eine industrielle Nutzung im Kranbereich ermöglicht.

Eine Steuereinheit, welche beispielsweise dem Kran zugeordnet ist, weist Mittel zur Durchführung des Verfahrens auf, welche beispielswiese einen digitalen Logikbaustein, insbesondere einen Mikroprozessor, einen Mikrocontroller oder einen ASIC (application-specific integrated circuit) umfassen. Zusätzlich oder alternativ umfassen die Mittel zur Durchführung des Verfahrens eine GPU oder einen sogenannten "AI Accelerator".

Das Computerprogramm kann einen "digitalen Zwilling", auch "digital twin" genannt, umfassen oder als ein solcher ausgebildet sein, der unter anderem die 3D-Punktwolke, welche das Objekt repräsentiert, umfassen kann. Ein derartiger digitaler Zwilling ist beispielsweise in der Offenlegungsschrift US 2017/0286572 A1 dargestellt. Der Offenbarungsgehalt von US 2017/0286572 A1 wird durch Verweisung in die vorliegende Anmeldung mit einbezogen.

Das Detektieren der zumindest einen Struktur zum Positionieren der Last erfolgt mittels eines neuronalen Netzes. Beispielsweise wird ein Region Based Convolutional Neural Networks (R-CNN), insbesondere ein Faster R-CNN verwendet. Beispielsweise wird zumindest eine 2D-Projektionsebene mit Trainingsdaten des neuronalen Netzes verglichen. Trainingsdaten können unter anderem durch generisches Lernen von Referenzstrukturen wie Twistlocks, Streben usw. erzeugt werden. Mittels eines derartigen neuronalen Netzes kann eine Vielzahl von unterschiedlichen Strukturen zum Positionieren der Last einfach und zuverlässig detektiert werden.

Die 2D-Projektionsebene weist Pixel auf, welche Punkte der Projektion repräsentieren, wobei den Pixeln zumindest ein Kanal zugeordnet wird, welcher eine Höheninformation, eine Remission und/oder Informationen zu Flächennormalen umfasst. Durch die Projektion auf eine 2D-Projektionsebene wird die Anzahl der Pixel reduziert, was zu einer Reduzierung der Rechenzeit führt. Durch die Einbeziehung der Höheninformation, der Remission und/oder der Informationen zu Flächennormalen wird die Genauigkeit der Detektion der Struktur, insbesondere beim Rückprojizieren in den dreidimensionalen Raum, verbessert. Bei Verwendung mehrerer Kanäle, welche beispielsweise parallel verarbeitet werden, ist zusätzlich eine verbesserte Genauigkeit erzielbar.

Eine weitere Ausführungsform sieht folgende weitere Schritte vor: Ermitteln zumindest einer 2D-Bounding-Box, welche eine Struktur umfasst, Rückprojizieren der 2D-Projektionsebene innerhalb der zumindest einen 2D-Bounding-Box, Ermitteln zumindest einer 3D-Bounding-Box in der 3D-Punktwolke anhand der zumindest einen 2D-Bounding-Box, Ermitteln einer Position der zumindest einen Struktur innerhalb der 3D-Bounding-Box. Insbesondere wird ein hinsichtlich der Struktur, beispielsweise ein Twistlock, relevanter Bereich in Form von einer möglichst eng umschließenden Bounding-Box detektiert. Beispielsweise ist zusätzliches Wissen über typische Objektgrößen sowie geometrische und/oder andere prozesstechnische Zusammenhänge bei der Ermittlung der 2D-Bounding-Box mit berücksichtigbar. Insbesondere kann eine derartige Bounding-Box als Filter fungieren, wobei Punkte, die innerhalb dieser Box liegen, zur zu detektierenden Struktur gehören oder der zu detektierenden Struktur zugewiesen werden. Eine derartige Verwendung einer Bounding-Box verringert zusätzlich Berechnungszeit.

Eine weitere Ausführungsform sieht vor, dass mindestens zwei 2D-Projektionsebenen ermittelt werden, welche sich hinsichtlich eine Projektionsrichtung unterscheiden. Beispielsweise sind die mindestens zwei 2D-Projektionsebenen orthogonal zueinander angeordnet. Durch mindestens zwei 2D-Projektionsebenen ist eine verbesserte Genauigkeit erzielbar.

Eine weitere Ausführungsform sieht vor, dass das Projizieren der 3D-Punktwolke in zumindest zwei Teilebenen erfolgt, welche zur 2D-Projektionsebene zusammengesetzt werden. Dieses Vorgehen reduziert die Laufzeit der Algorithmen. Die zumindest zwei Teilebenen sind beispielsweise quadratisch ausgeführt, wobei ein quadratischer Input-Vektor für das neuronale Netz generiert wird. Ein derartiger quadratischer Input-Vektor reduziert die Berechnungszeit bei einer Weiterverarbeitung im neuronalen Netz.

Eine weitere Ausführungsform sieht vor, dass zumindest eine zusätzliche Übergangs-Ebene ermittelt wird, welche einen Verbindungsbereich zweiter Teilebenen enthält. Insbesondere da neuronale Netze in einem Randbereich von Abbildungen fehleranfälliger sind und vermieden werden soll, dass wichtige Strukturen am Rand eines Slices "zerschnitten" werden, ist durch derartige Übergangs-Ebenen eine verbesserte Genauigkeit erzielbar.

Eine weitere Ausführungsform sieht vor, dass das Erfassen des Objekts mittels eines laserbasierten Sensors erfolgt. Mittels laserbasierter Sensoren lässt sich schnell und kostengünstig eine 3D-Punktwolke eines Objekts erstellen.

Im Folgenden wird die Erfindung anhand der in den Figuren dargestellten Ausführungsbeispiele näher beschrieben und erläutert. Es zeigen
- FIG 1: ein Ablaufdiagramm eines Verfahrens zur Ermittlung einer Zielposition beim automatisierten Positionieren einer Last auf einem Objekt,
- FIG 2: eine schematische Darstellung eines Verfahrens zur Ermittlung einer Zielposition beim automatisierten Positionieren einer Last auf einem Objekt,
- FIG 3: eine dreidimensionale Darstellung eines Twistlocks,
- FIG 4: eine dreidimensionale Darstellung einer klappbaren Seitenborde,
- FIG 5: eine schematische Darstellung eines zweiten Verfahrens zur Ermittlung einer Zielposition beim automatisierten Positionieren eines Containers auf einem LKW,
- FIG 6: eine schematische Darstellung eines dritten Verfahrens zur Ermittlung einer Zielposition beim automatisierten Positionieren eines Containers auf einem LKW,
- FIG 7: eine schematische Darstellung eines vierten Verfahrens zur Ermittlung einer Zielposition beim automatisierten Positionieren eines Containers auf einem LKW,
- FIG 8: eine schematische Darstellung eines fünften Verfahrens zur Ermittlung einer Zielposition beim automatisierten Positionieren eines Containers auf einem LKW,
- FIG 9: eine schematische Darstellung eines sechsten Verfahrens zur Ermittlung einer Zielposition beim automatisierten Positionieren eines Containers auf einem LKW und
- FIG 10: einen Kran mit einem Positionierungssystem.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

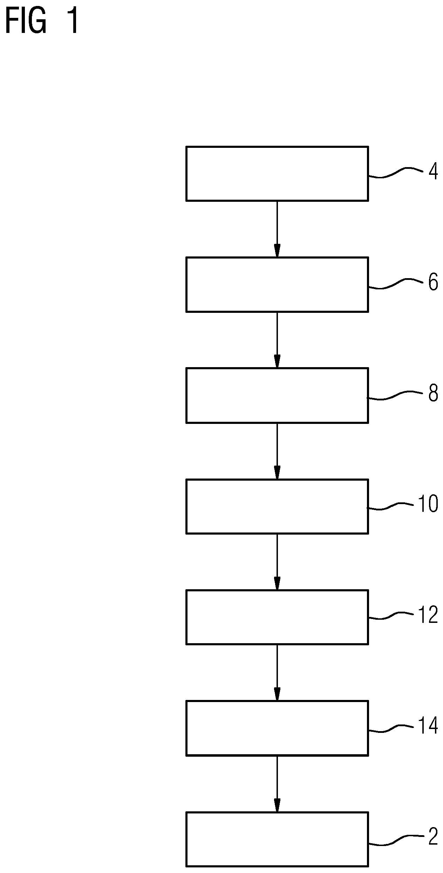

FIG 1 zeigt ein Ablaufdiagramm eines Verfahrens zum automatisierten Positionieren (2) einer Last auf einem Objekt. Das Positionieren 2 der Last erfolgt beispielsweise mittels eines Krans auf einem LKW oder einem Containergebirge. Das Verfahren beinhaltet ein Erfassen 4 des Objekts mittels eines laserbasierten Sensors. Daraufhin erfolgt ein Erstellen 6 einer 3D-Punktwolke, welche das Objekt repräsentiert. In einem weiteren Schritt erfolgt ein Projizieren 8 der 3D-Punktwolke in zumindest eine 2D-Projektionsebene. Daraufhin erfolgt ein Detektieren 10 zumindest einer Struktur zum Positionieren der Last mittels Bildverarbeitung, wobei beispielsweise Daten der 2D-Projektionsebene mit Trainingsdaten eines neuronalen Netzes verglichen werden. Eine derartige Struktur ist beispielsweise ein Twistlock auf einer Ladefläche eines LKWs. In einem weiteren Schritt erfolgt ein Rückprojizieren 12 der 2D-Projektionsebene in den dreidimensionalen Raum. Anschließend erfolgt ein Ermitteln 14 einer Position der zumindest einen Struktur im dreidimensionalen Raum. Daraufhin erfolgt das eigentliche Positionieren 2 der Last anhand der Position der zumindest einen Struktur.

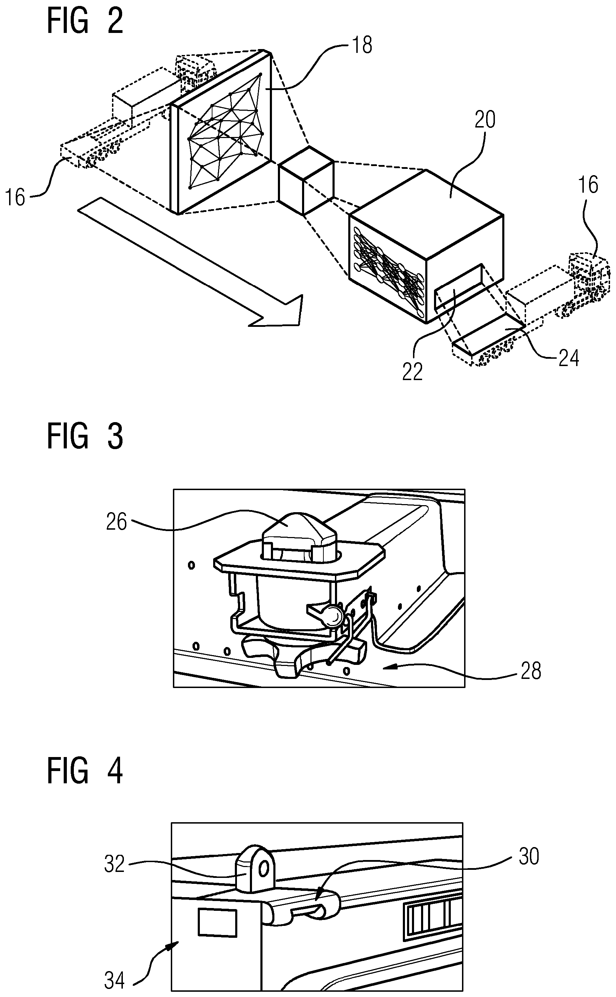

FIG 2 zeigt eine schematische Darstellung eines ersten Verfahrens zur Ermittlung einer Zielposition beim automatisierten Positionieren eines Containers auf einem LKW. Eine von einem Laserscanner, insbesondere 3D Laserscanner, erstellte 3D Punktwolke 16 wird in den zweidimensionalen Raum projiziert. Die 2D-Projektionsebene 18 der 3D Punktwolke 16 wird mittels eines neuronalen Netzes 20 durch maschinelle Lernalgorithmen der Bildverarbeitung weiterverarbeitet. Beispielsweise wird ein Region Based Convolutional Neural Networks (R-CNN), insbesondere ein Faster R-CNN verwendet. Das neuronale Netz 20 kann unter anderem durch generisches Lernen von Referenzstrukturen wie Twistlocks, Streben usw. trainiert werden. Mittels eines derartigen neuronalen Netzes wird zumindest eine Struktur zum Positionieren der Last detektiert. Das hieraus erlernte Ergebnis 22, insbesondere die Position der zumindest einen Struktur, wird in einem weiteren Schritt zurück in den dreidimensionalen Raum transformiert und als zumindest eine Ziel-Position 24 an den nachfolgenden Prozess, beispielsweise das Positionieren der Last anhand der Position der zumindest einen Struktur, weitergegeben. Die weitere Ausführung des Verfahrens in FIG 2 entspricht der in FIG 1.

FIG 3 zeigt eine dreidimensionale Darstellung eines Twistlocks, welche zum Verriegeln eines Containers auf einer Ladefläche, beispielsweise eines LKWs, vorgesehen ist.

FIG 4 zeigt eine dreidimensionale Darstellung einer klappbaren Seitenborde 30 mit einem Aufsetzzapfen 32, welcher auf einem Tragwagen 34 angeordnet ist.

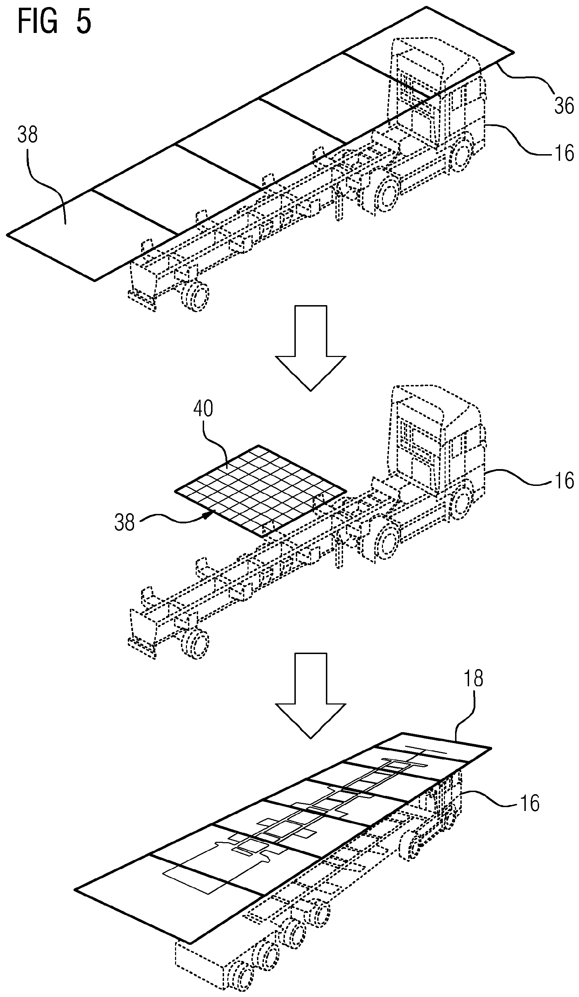

FIG 5 zeigt eine schematische Darstellung eines zweiten Verfahrens zur Ermittlung einer Zielposition beim automatisierten Positionieren eines Containers auf einem LKW. Für die 2D-Projektionsebene 18 der 3D Punktwolke 16 wird ein relevanter Bereich 36 in beispielhaft fünf kleinere Teilebenen 38, Slices genannt, unterteilt. Für jeden dieser fünf kleineren Teilebenen 38,... wobei das Projizieren 8 der 3D-Punktwolke 16 jeweils innerhalb dieser Teilebenen 38 erfolgt. Dieses Vorgehen reduziert die Laufzeit der Algorithmen. Ferner ist ein quadratischer Input-Vektor für die Weiterverarbeitung im neuronalen Netz bereitstellbar. Eine projizierte Teilebene 38 repräsentiert eine gerasterte Version der korrespondierenden 3D Punktwolke 16. Die Teilebene 38 weist Pixel 40 auf, welche Punkte der Projektion repräsentieren. Die beispielhaft fünf Teilebenen werden in einem weiteren Schritt zur 2D-Projektionsebene 18 der 3D Punktwolke 16 zusammengesetzt. Die weitere Ausführung des Verfahrens in FIG 5, insbesondere die Weiterverarbeitung mittels des neuronalen Netzes 20 und die anschließende Rücktransformation in den dreidimensionalen Raum, entspricht der in FIG 2.

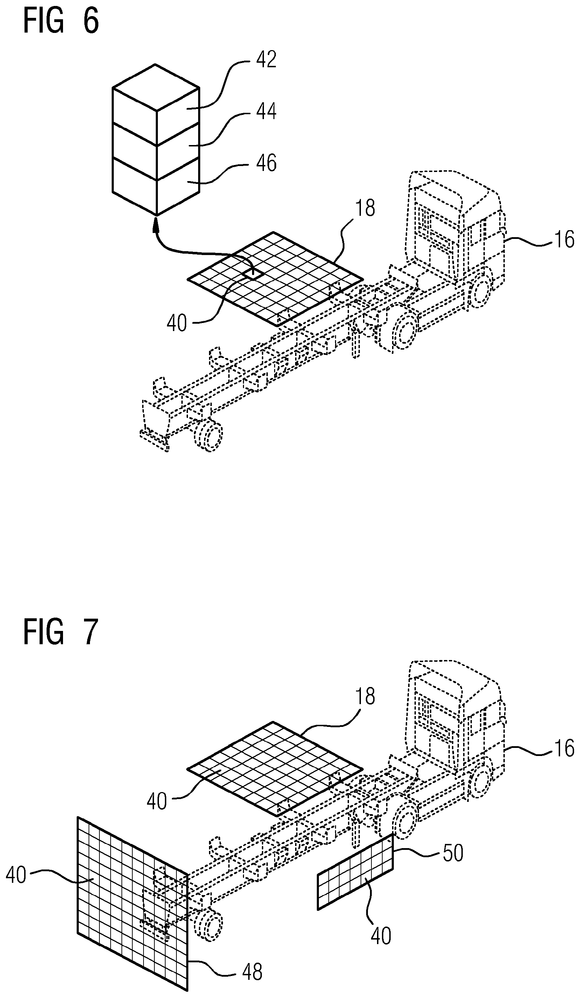

FIG 6 zeigt eine schematische Darstellung eines dritten Verfahrens zur Ermittlung einer Zielposition beim automatisierten Positionieren eines Containers auf einem LKW. Wie in FIG 2 gezeigt wird eine von einem Laserscanner, insbesondere 3D Laserscanner, erstellte 3D Punktwolke 16 in den zweidimensionalen Raum projiziert. Die 2D-Projektionsebene 18 weist Pixel 40 auf, welche Punkte der Projektion repräsentieren. Beispielhaft sind die Punkte jeweils drei Kanälen 42, 44, 46 zugeordnet, wobei ein erster Kanal 42 eine Höheninformation, ein zweiter Kanal 44 eine Remission und ein dritter Kanal 46 Informationen zu Flächennormalen umfasst. Die Kanäle 42, 44, 46 sind kombiniert auswertbar, sodass eine verbesserte Genauigkeit erzielbar ist. Die weitere Ausführung des Verfahrens in FIG 6, insbesondere die Weiterverarbeitung mittels des neuronalen Netzes 20 und die anschließende Rücktransformation in den dreidimensionalen Raum, entspricht der in FIG 2.

FIG 7 zeigt eine schematische Darstellung eines vierten Verfahrens zur Ermittlung einer Zielposition beim automatisierten Positionieren eines Containers auf einem LKW. Anhand der 3D Punktwolke 16 werden beispielhaft drei 2D-Projektionsebenen 18, 48, 50 ermittelt, welche sich hinsichtlich eine Projektionsrichtung unterscheiden. Exemplarisch sind die 2D-Projektionsebenen 18, 48, 50 orthogonal zueinander angeordnet. Die 2D-Projektionsebenen 18, 48, 50 weisen jeweils Pixel 40 auf, welche, wie in FIG 6 gezeigt, mehreren Kanälen 42, 44, 46 zugeordnet werden können, sodass in den 2D-Projektionsebenen 18, 48, 50 jeweils Höheninformationen, Remissionen und/oder Informationen zu Flächennormalen auswertbar sind. Die weitere Ausführung des Verfahrens in FIG 7, insbesondere die Weiterverarbeitung mittels des neuronalen Netzes 20 und die anschließende Rücktransformation in den dreidimensionalen Raum, entspricht der in FIG 2.

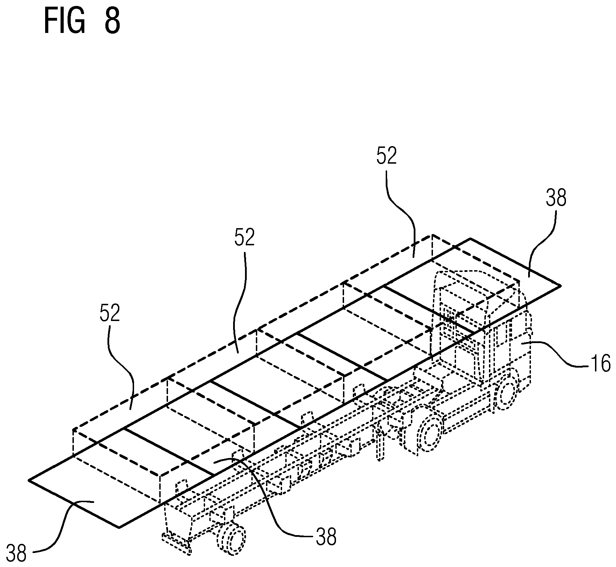

FIG 8 zeigt eine schematische Darstellung eines fünften Verfahrens zur Ermittlung einer Zielposition beim automatisierten Positionieren eines Containers auf einem LKW. Zusätzlich zu den Teilebenen 38 werden Übergangs-Ebenen 52 ermittelt, welche einen Übergangsbereich zwischen den Teilebenen 38 abdecken. Insbesondere da neuronale Netze in einem Randbereich von Abbildungen fehleranfälliger sind und vermieden werden soll, dass wichtige Strukturen am Rand eines Slices "zerschnitten" werden, ist durch derartige Übergangs-Ebenen 52 eine verbesserte Genauigkeit erzielbar. Die weitere Ausführung des Verfahrens in FIG 7 entspricht der in FIG 5.

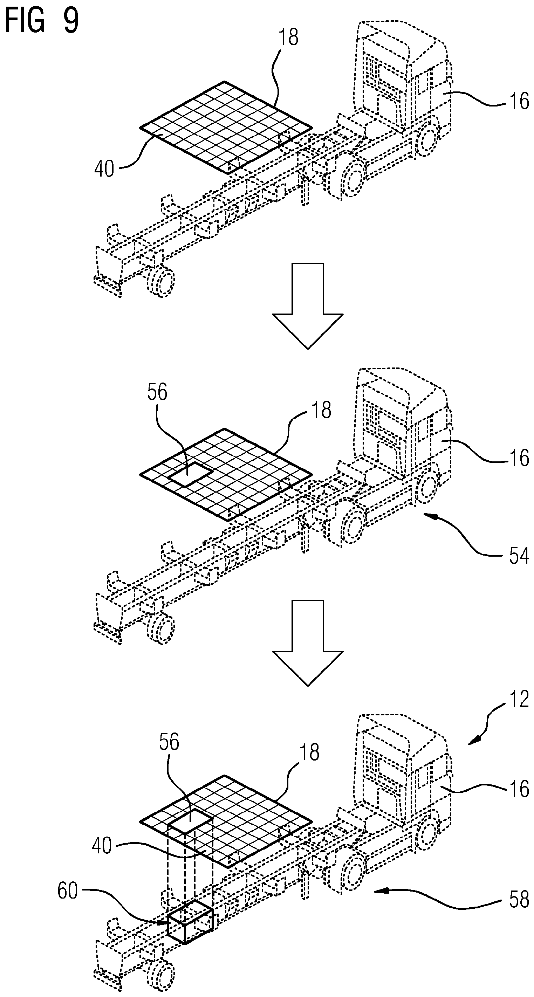

FIG 9 zeigt eine schematische Darstellung eines sechsten Verfahrens zur Ermittlung einer Zielposition beim automatisierten Positionieren eines Containers auf einem LKW. Eine von einem Laserscanner, insbesondere 3D Laserscanner, erstellte 3D Punktwolke 16 wird in den zweidimensionalen Raum projiziert. Die 2D-Projektionsebene 18 weist Pixel 40 auf, welche Punkte der Projektion repräsentieren.

In einem folgenden Schritt erfolgt ein Ermitteln 54 zumindest einer 2D-Bounding-Box 56, welche eine zu detektierende Struktur umfasst. Die Detektion der Struktur erfolgt mittels des neuronalen Netzes 20 durch maschinelle Lernalgorithmen der Bildverarbeitung.

In einem weiteren Verfahrensschritt erfolgt ein Rückprojizieren 12 der 2D-Projektionsebene 18 innerhalb der zumindest einen 2D-Bounding-Box 56 und ein Ermitteln 58 zumindest einer 3D-Bounding-Box 60 in der 3D-Punktwolke 16 anhand der zumindest einen 2D-Bounding-Box 56. Daraufhin erfolgt das Ermitteln 14 einer Position der zumindest einen Struktur gemäß FIG 1 innerhalb der 3D-Bounding-Box 60. Die weitere Ausführung des Verfahrens in FIG 9 entspricht der in FIG 2.

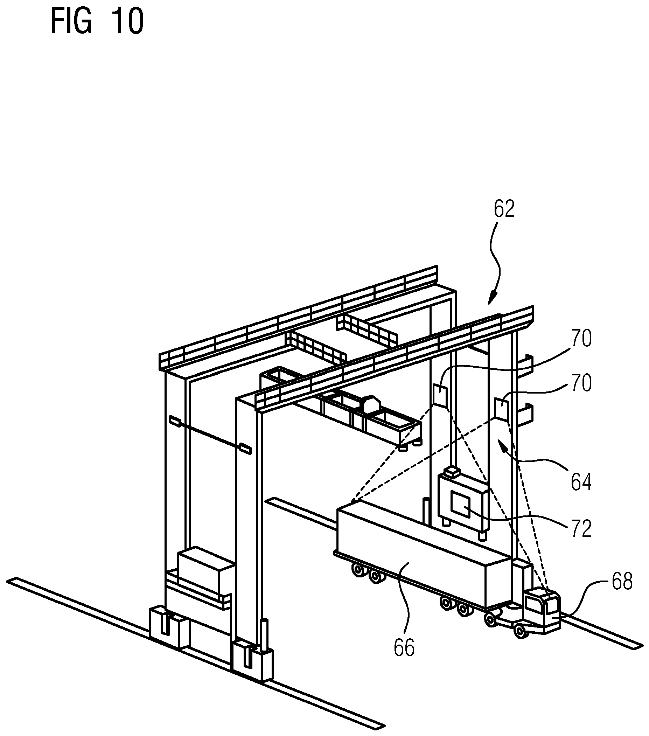

FIG 10 zeigt einen Kran 62 mit einem Positionierungssystem 64. Der Kran 62, welcher unter anderem als Containerkran oder als Portalkran ausgeführt sein kann, ist beispielhaft zum automatisierten Positionieren eines Containers 66 auf einem LKW 68 konfiguriert. Das Positionierungssystem 64 umfasst laserbasierte Sensoren 70 und eine Steuereinheit 72.

Zusammenfassend betrifft die Erfindung ein Verfahren zur Ermittlung einer Zielposition beim automatisierten Positionieren 2 einer Last auf einem Objekt. Um eine, im Vergleich zum Stand der Technik, verbesserte Performance und geringere Berechnungszeiten zu erreichen werden folgende Schritte vorgeschlagen: Erfassen 4 des Objekts mittels zumindest eines Sensors 70, Erstellen 6 einer 3D-Punktwolke 16, welche das Objekt repräsentiert, Projizieren 8 der 3D-Punktwolke 16 in zumindest eine 2D-Projektionsebene 18, Detektieren 10 zumindest einer Struktur zum Positionieren der Last mittels Bildverarbeitung, Rückprojizieren 12 der 2D-Projektionsebene 18 in den dreidimensionalen Raum und Ermitteln 14 einer Position der zumindest einen Struktur im dreidimensionalen Raum.

## Patentansprüche

1. Computer-implementiertes Verfahren zur Ermittlung einer Zielposition beim automatisierten Positionieren (2) einer Last auf einem Objekt, wobei die Last ein Container und das Objekt ein LKW ist, aufweisend folgende Schritte:
- Erfassen (4) des Objekts mittels zumindest eines laserbasierten Sensors (70),
- Erstellen (6) einer 3D-Punktwolke (16), welche das Objekt repräsentiert,
- Projizieren (8) der 3D-Punktwolke (16) in zumindest eine 2D-Projektionsebene (18),
- Detektieren (10) zumindest einer Struktur zum Positionieren der Last mittels Bildverarbeitung aus der 2D-Projektionsebene der 3D-Punktwolke (16),
wobei die zumindest eine Struktur ein Twistlock auf einer Ladefläche eines LKWs ist,
wobei das Detektieren (10) der zumindest einen Struktur zum Positionieren der Last mittels eines neuronalen Netzes erfolgt,
- Rückprojizieren (12) der 2D-Projektionsebene (18) in den dreidimensionalen Raum,
- Ermitteln (14) einer Position der zumindest einen Struktur im dreidimensionalen Raum,
wobei die 2D-Projektionsbene (18) Pixel (40) aufweist, welche Punkte der Projektion repräsentieren,
wobei den Pixeln (40) zumindest ein Kanal (42, 44, 46) zugeordnet wird,
welcher eine Höheninformation, eine Remission und/oder Informationen zu Flächennormalen umfasst.

2. Computer-implementiertes Verfahren zur Ermittlung einer Zielposition beim automatisierten Positionieren (2) einer Last auf einem Objekt, wobei die Last ein Container und das Objekt zumindest ein weiterer Container eines Containergebirges ist, aufweisend folgende Schritte:
- Erfassen (4) des Objekts mittels zumindest eines laserbasierten Sensors (70),
- Erstellen (6) einer 3D-Punktwolke (16), welche das Objekt repräsentiert,
- Projizieren (8) der 3D-Punktwolke (16) in zumindest eine 2D-Projektionsebene (18),
- Detektieren (10) zumindest einer Struktur zum Positionieren der Last mittels Bildverarbeitung aus der 2D-Projektionsebene der 3D-Punktwolke (16),
wobei die zumindest eine Struktur eine Kante auf dem weiteren Container ist,
wobei das Detektieren (10) der zumindest einen Struktur zum Positionieren der Last mittels eines neuronalen Netzes erfolgt,
- Rückprojizieren (12) der 2D-Projektionsebene (18) in den dreidimensionalen Raum,
- Ermitteln (14) einer Position der zumindest einen Struktur im dreidimensionalen Raum,
wobei die 2D-Projektionsbene (18) Pixel (40) aufweist, welche Punkte der Projektion repräsentieren,
wobei den Pixeln (40) zumindest ein Kanal (42, 44, 46) zugeordnet wird,
welcher eine Höheninformation, eine Remission und/oder Informationen zu Flächennormalen umfasst.

3. Verfahren nach einem der Ansprüche 1 oder 2,
aufweisend folgende weitere Schritte:
- Ermitteln (54) zumindest einer 2D-Bounding-Box (56), welche eine Struktur umfasst,
- Rückprojizieren (12) der 2D-Projektionsebene (18) innerhalb der zumindest einen 2D-Bounding-Box (56),
- Ermitteln (58) zumindest einer 3D-Bounding-Box (60) in der 3D-Punktwolke (16) anhand der zumindest einen 2D-Bounding-Box (56),
- Ermitteln (14) einer Position der zumindest einen Struktur innerhalb der 3D-Bounding-Box (60).

4. Verfahren nach einem der Ansprüche 1 bis 3,
wobei zumindest eine 2D-Projektionsebene (18) mit Trainingsdaten des neuronalen Netzes verglichen wird.

5. Verfahren nach einem der vorherigen Ansprüche,
wobei mindestens zwei 2D-Projektionsbenen (18, 48, 50) ermittelt werden, welche sich hinsichtlich einer Projektionsrichtung unterscheiden.

6. Verfahren nach einem der vorherigen Ansprüche,
wobei das Projizieren (8) der 3D-Punktwolke (16) in zumindest zwei Teilebenen (38) erfolgt, welche zur 2D-Projektionsbene (18) zusammengesetzt werden.

7. Verfahren nach Anspruch 6,
wobei zumindest eine zusätzliche Übergangs-Ebene (52) ermittelt wird, welche einen Verbindungsbereich zweiter Teilebenen (38) enthält.

8. Verfahren zum automatisierten Positionieren (2) einer Last auf einem Objekt umfassend ein Verfahren nach einem der Ansprüche 1 bis 7,
wobei ein Positionieren (2) der Last anhand der Position der zumindest einen Struktur erfolgt.

9. Verfahren nach Anspruch 8,
wobei das Positionieren (2) der Last mittels eines Krans (62) erfolgt.

10. Steuereinheit (72) mit Mitteln zur Durchführung eines Verfahrens nach einem der Ansprüche 1 bis 9.

11. Computerprogramm zur Durchführung eines Verfahrens nach einem der Ansprüche 1 bis 9 bei Ablauf in einer Steuereinheit (72) nach Anspruch 10.

12. Positionierungssystem (64) aufweisend zumindest einen, insbesondere laserbasierten, Sensor und eine Steuereinheit (72) nach Anspruch 10.

13. Kran (62) aufweisend zumindest ein Positionierungssystem (64) nach Anspruch 12.

## Claims

1. Computer-implemented method for determining a target position in the automated positioning (2) of a load on an object, wherein the load is a container and the object is a lorry, having the following steps:
- sensing (4) the object by means of at least one laser-based sensor (70),
- creating (6) a 3D point cloud (16), which represents the object,
- projecting (8) the 3D point cloud (16) into at least one 2D projection plane (18),
- detecting (10) at least one structure for the positioning of the load by means of image processing from the 2D projection plane of the 3D point cloud (16),
wherein the at least one structure is a twist lock on a loading bed of a lorry,
wherein the detection (10) of the at least one structure for positioning the load is carried out by means of a neural network,
- back-projecting (12) the 2D projection plane (18) into the three-dimensional space,
- determining (14) a position of the at least one structure in the three-dimensional space,
wherein the 2D projection plane (18) has pixels (40), which represent points of the projection,
wherein the pixels (40) are assigned at least one channel (42, 44, 46),
which comprises height information, a remission and/or information about surface normals.

2. Computer-implemented method for determining a target position in the automated positioning (2) of a load on an object, wherein the load is a container and the object is at least one further container of a container mountain, having the following steps,
- sensing (4) the object by means of at least one laser-based sensor (70),
- creating (6) a 3D point cloud (16), which represents the object,
- projecting (8) the 3D point cloud (16) into at least one 2D projection plane (18),
- detecting (10) at least one structure for the positioning of the load by means of image processing from the 2D projection plane of the 3D point cloud (16),
wherein the at least one structure is an edge on the further container,
wherein the detection (10) of the at least one structure for positioning the load is carried out by means of a neural network,
- back-projecting (12) the 2D projection plane (18) into the three-dimensional space,
- determining (14) a position of the at least one structure in the three-dimensional space,
wherein the 2D projection plane (18) has pixels (40), which represent points of the projection,
wherein the pixels (40) are assigned at least one channel (42, 44, 46),
which comprises height information, a remission and/or information about surface normals.

3. Method according to one of claims 1 or 2,
having the following further steps:
- determining (54) at least one 2D bounding box (56), which comprises a structure,
- back-projecting (12) the 2D projection plane (18) inside the at least one 2D bounding box (56),
- determining (58) at least one 3D bounding box (60) in the 3D point cloud (16) using the at least one 2D bounding box (56),
- determining (14) a position of the at least one structure inside the 3D bounding box (60).

4. Method according to one of claims 1 to 3,
wherein at least one 2D projection plane (18) is compared with training data of the neural network.

5. Method according to one of the preceding claims,
wherein at least two 2D projection planes (18, 48, 50) are determined, which differ in respect of a projection direction.

6. Method according to one of the preceding claims,
wherein the projection (8) of the 3D point cloud (16) is carried out in at least two partial planes (38), which are combined to form the 2D projection plane (18).

7. Method according to claim 6,
wherein at least one additional transition plane (52) is determined, which contains a connection region of second partial planes (38).

8. Method for the automated positioning (2) of a load on an object, comprising a method according to one of claims 1 to 7, wherein a positioning (2) of the load is carried out using the position of the at least one structure.

9. Method according to claim 8,
wherein the positioning (2) of the load is carried out by means of a crane (62).

10. Control unit (72) with means for performing a method according to one of claims 1 to 9.

11. Computer program for performing a method according to one of claims 1 to 9 on execution in a control unit (72) according to claim 10.

12. Positioning system (64) having at least one, in particular laser-based, sensor and a control unit (72) according to claim 10.

13. Crane (62) having at least one positioning system (64) according to claim 12.

## Revendications

1. Procédé mis en œuvre par ordinateur de détermination d'une position cible, lors de la mise (2) en position automatisée d'une charge sur un objet, la charge étant un conteneur et l'objet un camion, comportant les stades suivants :
- détection (4) de l'objet au moyen d'au moins un capteur (70) à base de laser,
- établissement (6) d'un nuage (16) de points en 3D, qui représente l'objet,
- projection (8) du nuage (16) de points en 3D sur au moins un plan (18) de projection en 2D,
- détection (10) d'au moins une structure de mise en position de la charge au moyen d'un traitement d'image à partir du plan de projection en 2D du nuage (16) de points en 3D,
dans lequel la au moins une structure est un twistlock sur une surface de charge d'un camion,
dans lequel la détection (10) de la au moins une structure pour la mise en position de la charge s'effectue au moyen d'un réseau neuronal,
- rétroprojection (12) du plan (18) de projection en 2D dans l'espace en trois dimensions,
- établissement (14) d'une position de la au moins une structure dans l'espace en trois dimensions,
dans lequel le plan (18) de projection en 2D a des pixels (40), qui représentent des points de la projection,
dans lequel aux pixels (40), est affecté au moins un canal (42, 44, 46),
qui comprend une information de niveau, une réflexion diffuse et/ou des informations sur des normales à la surface.

2. Procédé mis en œuvre par ordinateur d'établissement d'une position cible, lors de la mise (2) en position automatisée d'une charge sur un objet, dans lequel la charge est un conteneur et l'objet au moins un autre conteneur d'une montagne de conteneurs, comportant les stades suivants :
- détection (4) de l'objet au moyen d'au moins un capteur (70) à base de laser,
- établissement (6) d'un nuage (16) de points en 3D, qui représente l'objet,
- projection (8) du nuage (16) de points en 3D sur au moins un plan (18) de projection en 2D,
- détection (10) d'au moins une structure de mise en position de la charge au moyen d'un traitement d'image à partir du plan de projection en 2D du nuage (16) de points en 3D,
dans lequel la au moins une structure ait un bord sur l'autre conteneur,
dans lequel la détection (10) de la au moins une structure pour la mise en position de la charge s'effectue au moyen d'un réseau neuronal,
- rétroprojection (12) du plan (18) de projection en 2D dans l'espace en trois dimensions,
- établissement (14) d'une position de la au moins une structure dans l'espace en trois dimensions,
dans lequel le plan (18) de projection en 2D a des pixels (40), qui représentent des points de la projection,
dans lequel aux pixels (40), est affecté au moins un canal (42, 44, 46),
qui comprend une information de niveau, une réflexion diffuse et/ou des informations sur des normales à la surface.

3. Procédé suivant l'une des revendications 1 ou 2,
comportant les stades supplémentaires suivants :
- établissement (54) d'au moins une box bounding (56) en 2D, qui comprend une structure,
- rétroprojection (12) du plan (18) de projection en 2D à l'intérieur de la au moins une box bounding (56) en 2D,
- établissement (58) d'au moins une box bounding (60) en 3D dans le nuage (16) de points en 3D, à l'aide de la au moins une box bounding (56) en 2D,
- établissement (14) d'une position de la au moins une structure à l'intérieur de la box bounding (60) en 3D.

4. Procédé suivant l'une des revendications 1 à 3,
dans lequel on compare au moins un plan (18) de projection en 2D à des données d'apprentissage du réseau neuronal.

5. Procédé suivant l'une des revendications précédentes,
dans lequel on établit au moins deux plans (18, 48, 50) de projection en 2D, qui sont différents en ce qui concerne une direction de projection.

6. Procédé suivant l'une des revendications précédentes,
dans lequel la projection (8) du nuage (16) de points en 3D s'effectue dans au moins deux plans (38) partiels, qui sont rassemblés en le plan (18) de projection en 2D.

7. Procédé suivant la revendication 6,
dans lequel on établit au moins un plan (52) de transition supplémentaire, qui contient une zone de liaison de deux plans (38) partiels.

8. Procédé de mise (2) en position automatisée d'une charge sur un objet, comprenant un procédé suivant l'une des revendications 1 à 7,
dans lequel une mise (2) en position de la charge s'effectue à l'aide de la position de la au moins une structure.

9. Procédé suivant la revendication 8,
dans lequel la mise (2) en position de la charge s'effectue au moyen d'une grue (62).

10. Unité (72) de commande comprenant des moyens pour effectuer un procédé suivant l'une des revendications 1 à 9.

11. Programme d'ordinateur pour effectuer un procédé suivant l'une des revendications 1 à 9, lorsqu'il se déroule dans une unité (72) de commande suivant la revendication 10.

12. Système (64) de mise en position comportant au moins un capteur, en particulier à base de laser, et une unité (72) de commande suivant la revendication 10.

13. Grue (62) comportant au moins un système (64) de mise en position suivant la revendication 12.
